Europäisches Patentamt

European Patent Office

Office européen des brevets

(19)

(11) Publication number: **0 171 877**
**A1**

(12)

# EUROPEAN PATENT APPLICATION

(21) Application number: **85303525.1**

(22) Date of filing: **20.05.85**

(51) Int. Cl.⁴: **H 01 C 1/144**
**H 01 C 17/28, H 01 C 7/02**
**H 01 C 7/04, B 23 K 11/10**

(30) Priority: **02.08.84 GB 8419773**

(43) Date of publication of application:
**19.02.86 Bulletin 86/8**

(84) Designated Contracting States:
**AT BE CH DE FR IT LI LU NL SE**

(71) Applicant: **STANDARD TELEPHONES AND CABLES**
**PUBLIC LIMITED COMPANY**
**190 Strand**
**London, WC2R 1DU(GB)**

(72) Inventor: **Macklen, Eric Douglas**
**53 Scott Close**
**Taunton Somerset, TA2 6UL(GB)**

(74) Representative: **Capsey, Sydney Ross**
**Standard Telephones and Cables Patent Department**
**Edinburgh Way**
**Harlow Essex CM20 2SH(GB)**

(54) Method of securing leads to a thermistor.

(57) To make a negative temperature coefficient thermistor, a chip (1) of thermistor material, which may be rectangular or square, is provided with planar metallic, e.g. film, electrodes (2,3) on its two parallel faces. To these electrodes the lead wires (4,5) are attached by parallel gap welding. In this method of welding the welding electrodes are placed on spaced apart points (see the arrows) on the lead. The welding current thus flows partly in the wire but also in the electrode and a weld occurs.

After the leads are attached the device is encapsulated or sealed into an enclosure as needed.

The method is also applicable to positive temperature coefficient thermistors.

Fig.1.

EP 0 171 877 A1

TITLE MODIFIED
see front page

## THERMISTORS

This invention relates to thermistors, i.e. to thermally sensitive resistance devices.

Related Prior Art

British Patent No. 993280 (Siemens and Halske) describes a method of connecting a strip of metal to a face of a semiconductor device including the steps of placing the strip in contact with the said face by means of a stamp which has a blunt end where it contacts the strip whilst maintaining the temperature of the strip below its melting point. Thus this method uses thermocompression bonding.

British Patent No. 1257148 (STC) describes a disc-shaped thermistor element which has fired silver paste electrodes on its major faces, with the leads fixed to the electrodes by thermocompression bonding.

Thermocompression bonding, as used in the methods of the above-mentioned Patents, is based on the principle of heating the wire or tape directly by current passage and then compressing the wire or tape to cause the metal to flow into the electrode. This is the common method for attaching wires to semiconductors.

British Patent No. 1523738 (STC) describes a method of making a thermistor probe, e.g. for use in a liquid level sensor, in which lead wires are stuck to the ceramic thermistor material by silver paste. Here also, as in the other known arrangements, an effort is made to overcome the difficulty that a welding current cannot be allowed to flow into the thermistor material.

An object of the invention is to provide a method of securing the leads to a thermistor which enables resistive welding to be used.

According to the invention there is provided a method of manufacturing a thermistor, either a positive temperature coefficient thermistor or a negative coefficient thermistor, which includes providing a chip of thermistor material which has two parallel faces with planar metallic electrodes on said faces and attaching electrically conductive leads to said electrodes, characterised by the use of parallel gap resistance welding to weld each said lead to its one of said electrodes.

Thus resistive welding, which is the simplest and probably best method to secure a lead to an electrode can be used in making a thermistor. This avoids the difficulties which could arise if welding current flowed in the thermistor material, since with the form of welding used, the welding current flows mainly in the wire. Hence it is unlikely to have any detrimental effect on the thermistor material.

Embodiments of the invention will now be described with reference to the accompanying drawings, in which

Fig. 1 shows the arrangement of a rectangular chip thermistor made according to this invention.

Fig. 2 shows a thermistor as shown in Fig. 1 with the initial lead wires attached to thicker termination wires.

Figs. 3 and 4 are views similar to Figs. 1 and 2 for circular chip thermistors.

Figs. 5 to 12 show various methods of encapsulating thermistors such as Figs. 1 and 2, similar methods being usable for thermistors as shown in Figs. 3 and 4.

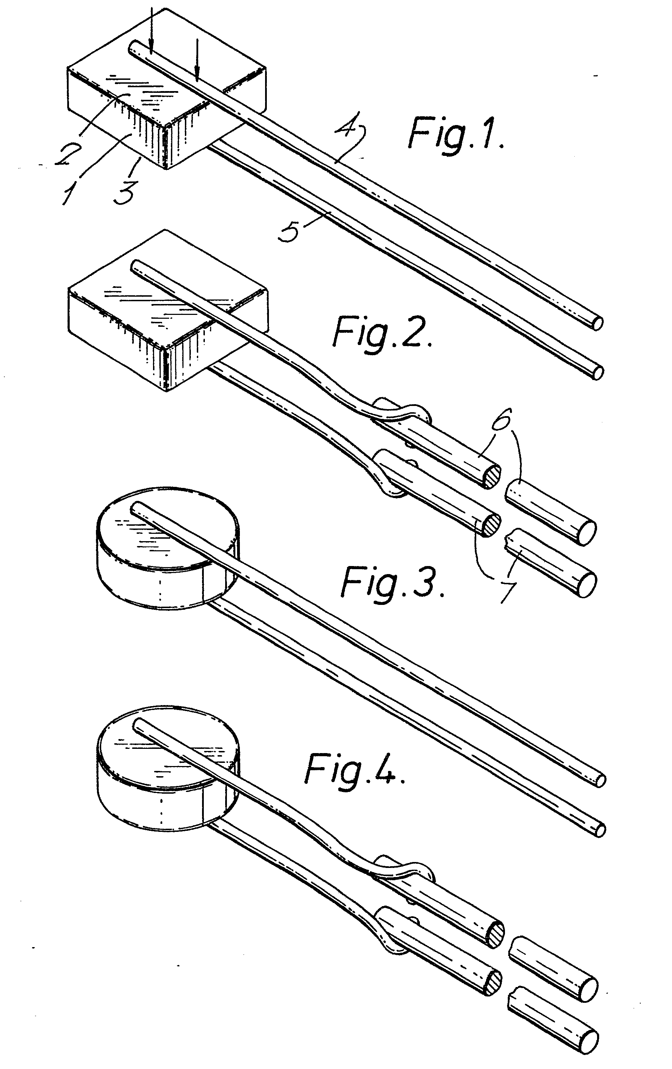

The thermistors to which this invention is applied have chips 1, Fig. 1, of thermistor material each having planar, e.g. film, metal electrodes 2, 3 on opposite faces. Leads 4, 5 have to be fixed to these electrodes.

The method was originally developed for NTC (Negative Temperature Coefficient) thermistors, but is also applicable to PTC (Positive Temperature Coefficient) thermistors, such as are usable, inter alia, as liquid level detection devices.

An NTC thermistor consists of a noble metal electroded thermistor chip which is ultimately to be encapsulated in glass, either in a sealed envelope or in a pellet of solid glass. Prior to the encapsulation the lead wires are secured to the metallic electrodes by parallel gap welding.

Parallel gap welding is effected by applying the welding electrodes to spaced points on the lead wire, e.g. at the points indicated by the two arrows in Fig. 1. The welding current then flows partly maybe mainly, in the wire, but also partly in the metal film electrode, so that welding takes place. Such a method of welding is desirable because conventional resistance pressure welding cannot be used in a chip-type thermistor.

Fig. 2 shows the arrangement where the lead wires are attached to thicker termination wires 6, 7.

Figs. 3 and 4 are views similar to Fig. 1 and 2 where the thermistor chip is circular.

The electrode material used is preferably silver, but gold, platinum, palladium and palladium/gold alloy can also be used. The lead wires, 4, 5, Fig. 1, are preferably of a copper clad nickel/iron alloy, often referred to as Dumet or CuNiFe. Other materials usable for the lead wires are nickel/iron alloy, nickel, copper, gold, platinum or silver.

Thin narrow tapes can be used instead of the circular-section wires shown, and in the case in which

circular-section wires are used the ends to be welded may be flattened prior to welding to assist the welding. As shown the wire welded to the chip's electrode may be itself secured, as by welding, to the emergent termination wire.

In the case of PTC thermistor, the chip electrode material may be silver, nickel, aluminium or copper-coated aluminium, and the lead material may be nickel, nickel/iron alloy, platinum, gold, silver, copper, copper-clad nickel/iron alloy (Dumet or CuNiFe) or a copper alloy such as brass.

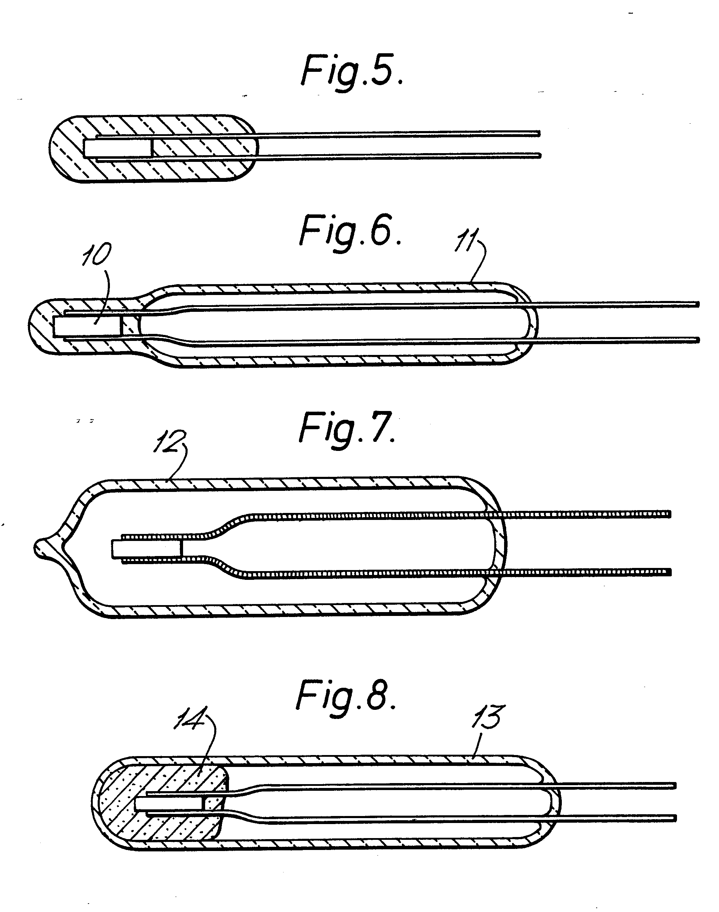

Fig. 5 shows a thermistor such as that of Fig. 1, encapsulated into a solid glass pellet.

Fig. 6 shows a thermistor such as that of Fig. 1, encapsulated into a solid glass tip, with the major portion of the wires' lengths enclosed in a sealed glass envelope 11.

In Fig. 7, the thermistor chip is sealed into a glass envelope 12. The sealed envelope may be either vacuum or gas-filled.

Fig. 8 has the thermistor chip sealed into one end of a sealed glass envelope 13 by a mass 14 of a suitable electrically insulating material such as an epoxy resin or a silicone rubber.

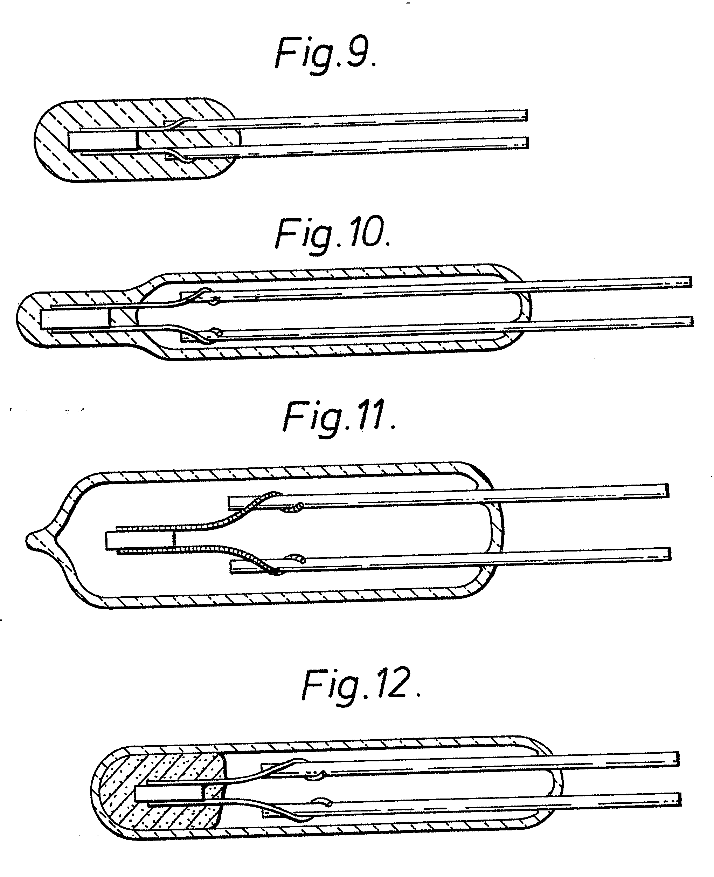

Figs. 9, 10, 11 and 12 are similar to Figs. 5, 6, 7 and 8, but applied to a thermistor as shown in Fig. 2.

Note that the above encapsulation techniques are equally applicable to circular chip thermistors such as shown in Figs. 3 and 4.

- 5 -

0171877

CLAIMS :

1.      A method of manufacturing a thermistor, either a positive temperature coefficient thermistor or a negative coefficient thermistor, which includes providing a chip of thermistor material which has two parallel faces with planar metallic electrodes on said faces and attaching electrically conductive leads to said electrodes, characterised by the use of parallel gap resistance welding to weld each said lead to its one of said electrodes.

2.      A method as claimed in claim 1, characterised in that the leads used are flat tapes.

3.      A method as claimed in claim 1, characterised in that the leads used are round cross-section wires each having a flattened portion to facilitate welding.

4.      A method as claimed in claim 1, 2 or 3, characterised in that, in the case of a negative coefficient thermistor, the electrode material is selected from gold, silver, platinum, palladium and palladium/gold alloy.

5.      A method as claimed in claim 1, 2, 3 or 4, characterised in that in the case of a positive temperature coefficient thermistor the electrode material is selected from silver, aluminium, copper coated aluminium and nickel.

6.      A method as claimed in claim 1, 2, 3, 4 or 5, characterised in that the lead wires are of a material selected from a copper clad nickel/iron alloy, nickel/iron alloy, nickel, copper, gold, platinum or silver.

7.      A method as claimed in any one of claims 1 to 6, characterised in that each said lead is secured to a further electrically conductive wire, e.g. by welding.

8.      A method as claimed in any one of claims 1 to 7, characterised in that after the leads have been welded to the electrodes the device is encapsulated in a pellet of glass or the like.

Fig.1.

Fig.2.

Fig.3.

Fig.4.

Fig.5.

Fig.6.

10          11

Fig.7.

12

Fig.8.

14          13

0171877

## Fig.9.

## Fig.10.

## Fig.11.

## Fig.12.

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| D,A | GB-A-1 257 148 (STANDARD TELEPHONES AND CABLES LTD.) * Claims 1-3,5,6; page 1, lines 11-91; figures 1,2 * | 1,2,4, 6-8 | H 01 C 1/144 H 01 C 17/28 H 01 C 7/02 H 01 C 7/04 B 23 K 11/10 |
| A | GB-A-1 173 760 (MIAL S.P.A.) | | |
| A | EP-A-0 001 750 (SIEMENS AG) | | |
| A | EP-A-0 061 550 (THE YELLOW SPRINGS INSTRUMENT) | | |
| A | IBM TECHNICAL DISCLOSURE BULLETIN, vol. 5, no. 9, February 1963, pages 16-17, New York, US; B. HAIRABEDIAN: "Resistance welder for use with thin films" | | |

TECHNICAL FIELDS SEARCHED (Int. Cl.4)

H 01 C
B 23 K

The present search report has been drawn up for all claims

| Place of search | Date of completion of the search | Examiner |
|---|---|---|
| THE HAGUE | 29-10-1985 | DECANNIERE L.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503. 03.82